# EUROPEAN PATENT APPLICATION

(11) **EP 4 574 259 A1**
(43) Date of publication of application: **25.06.2025**
(21) Application number: 24183574.3
(22) Date of filing: 21.06.2024
(51) Int. Cl.: B01J 31/02

(54) **CATALYST FOR CHEMICAL PRETREATMENT OF WASTE FAT, OIL AND GREASE, AND PREPARATION METHOD AND USE THEREOF**

(30) Priority: 21.12.2023 CN 202311773339
(71) Applicant: Fuzhou University, 350108 Fuzhou Fujian (CN)
(72) Inventor: JIANG, Lilong, Fuzhou, 350108 (CN); HUANG, Kuan, Fuzhou, 350108 (CN); MA, Yongde, Fuzhou, 350108 (CN); CAO, Yanning, Fuzhou, 350108 (CN); CAI, Zhenping, Fuzhou, 350108 (CN)
(74) Representative: Huang, Liwei

(57) **Abstract**

Provided are a catalyst for chemical pretreatment of waste fat, oil and/or grease (FOG), and a preparation method and use thereof. The catalyst comprises three components of component A, component B, and component C; wherein the component A is a Bronsted acid protic ionic liquid composed of a linear or heterocyclic tertiary amine cation and an anion, the component B is at least one selected from the group consisting of organic acid and inorganic acid; the component C is at least one selected from low-carbon alcohols; and a mass ratio of the component A, the component B and the component C is in a range of (1.0-4.0):(0.01-0.3):(1.0-6.0). The catalyst is prepared by subjecting corresponding anions and cations to one-step neutralization reaction to obtain component A, and then mechanically mixing component A, and components B and C.

## Description

### TECHNICAL FIELD

The present disclosure relates to the technical field of renewable energy, and in particular to a catalyst for chemical pretreatment of waste fat, oil and/or grease (FOG), and a preparation method and use thereof.

### BACKGROUND

The vigorous development of biodiesel production projects meets the need to develop clean energy in China. According to industry test data, every ton of biodiesel used throughout the cycle can achieve 2.0 tons to 2.5 tons of carbon emission reductions. As certified by the Dutch Double Counting of the European Union that is the largest consumer of biomass energy in the world, compared with biodiesel produced from vegetable oils such as palm oil, soybean oil, and rapeseed oil as raw materials, biodiesel produced from waste FOG such as hogwash oil, and acidified oil as raw materials has higher carbon emission reduction properties and should be vigorously promoted and used. The waste FOG is a kind of by-product of the edible oil processing industry with wide and stable sources. Compared with animal fats and vegetable oils and microbial oils, the waste FOG is relatively cheap, and thus it has obvious cost advantages as raw materials for preparing second-generation biodiesel through hydrodeoxygenation.

However, the waste FOG has high fatty acid content and high acid value, and a hydrodeoxygenation reaction is carried out under high-temperature conditions and generates a large amount of water, which seriously affects the stability of the hydrogenation catalyst and causes the catalyst bed layer to be easily pulverized and deactivated. In addition, the waste FOG also contains a large amount of impurities such as metals, phospholipids, and unsaponifiable substances. The deposition of such impurities on a surface of the hydrogenation catalyst also affects the stability of the hydrogenation catalyst. Therefore, when the waste FOG is used as raw materials to prepare second-generation biodiesel, the device needs to be frequently shut down to replace the catalyst, thus preventing stable run for a long period and resulting in high operating cost. In the existing technology for preparing the second-generation biodiesel by using the hydrodeoxygenation method, the waste FOG is generally pretreated by using conventional physical methods such as water method, acid washing, alkali washing, and adsorption, which can remove some impurities, but has a relatively low overall efficiency, and the conventional physical pretreatment methods cannot fundamentally solve the problem of high acid value of the waste FOG.

### SUMMARY

In view of the deficiencies in prior art, the present disclosure provides a catalyst for chemical pretreatment of waste FOG, and a preparation method and use thereof. The catalyst is prepared by mixing a Bronsted acid protic ionic liquid composed of linear or heterocyclic tertiary amine cations and anions and an acid as well as a low-carbon alcohol. The catalyst may be obtained through one-step neutralization reaction and mechanical mixing. The preparation method is simple, with a high raw material utilization rate.

The present disclosure provides the following technical solutions:
According to a first aspect of the present disclosure, provided is a catalyst for chemical pretreatment of waste FOG comprising (or consisting of) three components of component A, component B, and component C, where the component A is a Bronsted acid protic ionic liquid composed of a linear or heterocyclic tertiary amine cation and an anion, and the linear tertiary amine cation has a chemical structure represented by following formula: 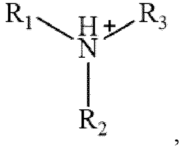
R₁, R₂ and R₃ each being independently C₄₋₁₂ straight-chain or branched alkyl;
the heterocyclic tertiary amine cation has a chemical structure selected from the group consisting of: 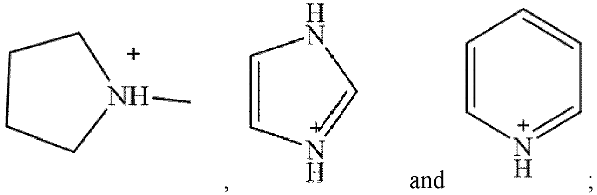
the anion is one selected from the group consisting of hydrogen sulfate ion, methane sulfonate ion, benzene sulfonate ion, and p-toluenesulfonate ion;
the component B is at least one selected from the group consisting of sulfuric acid, methanesulfonic acid, benzenesulfonic acid, and p-toluenesulfonic acid;
the component C is at least one selected from the group consisting of methanol, ethanol, propanol, and butanol; and
a mass ratio of the component A, the component B and the component C in the catalyst is in a range of (1.0-4.0):(0.01-0.3):(1.0-6.0).

According to a second aspect of the present disclosure, provided is a method for preparing the catalyst for chemical pretreatment of the waste FOG as described in the above solutions including: adding component A, component B, and component C into a storage tank according to a specific proportion to obtain a mixture; and subjecting the mixture to mechanical mixing to obtain the catalyst.

In some embodiments, the component A is prepared by subjecting a linear or heterocyclic tertiary amine compound and an acid selected from the group consisting of sulfuric acid, methanesulfonic acid, benzenesulfonic acid, and p-toluenesulfonic acid to one-step neutralization reaction.

In some embodiments, the component A is prepared by a process including:
S1, mixing a corresponding tertiary amine compound and the acid in an equimolar amount in a reaction kettle and stirring to be uniform to obtain a mixed system, subjecting the mixed system to reaction to obtain an ionic liquid mixture; and
S2, subjecting the ionic liquid mixture to rotary evaporation and then performing vacuum drying in a vacuum drying oven to obtain an ionic liquid.

In some embodiments, in step S1, the reaction is conducted for 2 hours to 10 hours.

In some embodiments, in step S2, the rotary evaporation is conducted at a temperature of 95°C to 100°C for 4 hours to 6 hours, and the vacuum drying is conducted at a temperature of 95°C to 100°C for 12 hours to 24 hours.

According to a third aspect of the present disclosure, provided is use of the above-described catalyst for chemical pretreatment of the waste FOG, including: adding the catalyst, the waste FOG, and a low-carbon alcohol into an esterification reactor to obtain a mixed system, and subjecting the mixed system to esterification reaction at a temperature of 50°C to 120°C and a pressure of 0.1 MPa to 1.0 MPa; where a mass ratio of the waste FOG, the low-carbon alcohol and the catalyst is in a range of 1:(0.4-1.6):(0.05-0.50).

After the esterification reaction is completed, a reactant material is subjected to liquid-liquid phase separation through a chromatography device. The catalyst is in a resulting water phase in a lower layer, and the water phase is introduced into a catalyst recovery evaporation system, and a recovered catalyst returns to a catalyst storage tank for recycling and reuse.

Some embodiments of the present disclosure have the following advantages:
A. The catalyst preparation method according to the present disclosure is simple and has a high raw material utilization rate. The pretreatment catalyst is prepared by subjecting a tertiary amine compound and an acid in an equimolar amount to one-step neutralization reaction to obtain a Bronsted acid protic ionic liquid and then mechanically mixing the ionic liquid, an inorganic acid/an organic acid, and a low-carbon alcohol. The catalyst exhibits low viscosity, good fluidity, and convenient transportation.
B. The catalyst according to the present disclosure has high performance and a significant pretreatment effect. After the waste FOG is subjected to chemical pretreatment, the acid value is reduced to 10 mg KOH/g to 30 mg KOH/g, and the removal rates of Fe, Ca, Na, P, and unsaponifiable substances are 99% or more, 99% or more, 80% or more, 60% or more, 50% or more, respectively, indicating a remarkable impurity removal effect.

### DETAILED DESCRIPTION OF THE EMBODIMENTS

The technical solutions of the present disclosure will be clearly and completely described below. Obviously, the described examples are some, not all, of the embodiments of the present disclosure. Based on the embodiments of the present invention, other embodiments may be obtained by those skilled in the art without creative effort, and these embodiments shall fall within the scope of the present disclosure.

### Example 1

A method for preparing a catalyst for chemical pretreatment of waste FOG was conducted as follows:
S1. Under room temperature, 1.5 mol of trioctylamine was added into a reaction kettle; a stirring device was started at a rotation speed of 500 r/min and methanesulfonic acid in an equimolar amount was added dropwise into trioctylamine; and a resulting mixed system was subjected to reaction for 10 hours, obtaining an ionic liquid mixture.
S2. The ionic liquid mixture was subjected to rotary evaporation at a temperature of 95°C for 4 hours, and a resulting product was then placed in a vacuum drying oven and subjected to vacuum drying therein at 95°C for 24 hours, obtaining a trioctylamine methanesulfonic acid ionic liquid.
S3. Methanol, p-toluenesulfonic acid, and the trioctylamine methanesulfonic acid ionic liquid (at a mass ratio of methanol to p-toluenesulfonic acid to the ionic liquid of 6:0.1:4) were sequentially added into a catalyst storage tank, and stirred by a stirring device at a rotation speed of 300 r/min to obtain a pretreatment catalyst I.

### Example 2

A method for preparing a catalyst for chemical pretreatment of waste FOG was conducted as follows:
S1. Under room temperature, 2.0 mol of dibutylmethylamine was added into a reaction kettle; a stirring device was started at a rotation speed of 500 r/min and benzenesulfonic acid in an equimolar amount was added dropwise into dibutylmethylamine; and a resulting mixed system was subjected to reaction for 10 hours, obtaining an ionic liquid mixture.
S2. The ionic liquid mixture was subjected to rotary evaporation at a temperature of 95°C for 4 hours, and a resulting product was then placed in a vacuum drying oven and subjected to vacuum drying at 95°C for 24 hours, obtaining a dibutylmethylamine benzenesulfonic acid ionic liquid.
S3. Propanol, sulfuric acid, and the dibutylmethylamine benzenesulfonic acid ionic liquid (at a mass ratio of propanol to sulfuric acid to the ionic liquid of 6:0.15:1) were sequentially added into a catalyst storage tank, and stirred by a stirring device at a rotation speed of 300 r/min to obtain a pretreatment catalyst II.

### Example 3

A method for preparing a catalyst for chemical pretreatment of waste FOG was conducted as follows:
S1. Under room temperature, 1.5 mol of N-methylpyrrole was added into a reaction kettle; a stirring device was started at a rotation speed of 500 r/min and benzenesulfonic acid in an equimolar amount was added dropwise into N-methylpyrrole, and a resulting mixed system was subjected to reaction for 10 hours, obtaining an ionic liquid mixture.
S2. The ionic liquid mixture was subjected to rotary evaporation at a temperature of 95°C for 6 hours, and a resulting product was then placed in a vacuum drying oven and subjected to vacuum drying at 100°C for 12 hours, obtaining a methylpyrrole benzenesulfonic acid ionic liquid.
S3. Ethanol, methanesulfonic acid, and the methylpyrrole benzenesulfonic acid ionic liquid (at a mass ratio of ethanol to methanesulfonic acid to the ionic liquid of 6:0.3:3) were sequentially added into a catalyst storage tank, and stirred by a stirring device at a rotation speed of 300 r/min to obtain a pretreatment catalyst III.

### Example 4

A method for preparing a catalyst for chemical pretreatment of waste FOG was conducted as follows:
S1. Under room temperature, 0.5 mol of imidazole was added into a reaction kettle; a stirring device was started at a rotation speed of 500 r/min and sulfuric acid in an equimolar amount was added dropwise into imidazole; and a resulting mixed system was subjected to reaction for 8 hours, obtaining an ionic liquid mixture.
S2. The ionic liquid mixture was subjected to rotary evaporation at a temperature of 96°C for 4 hours, and a resulting product was then placed in a vacuum drying oven and subjected to vacuum drying at 95°C for 24 hours, obtaining an imidazole bisulfate ionic liquid.
S3. Ethanol, benzenesulfonic acid, and the ionic liquid (at a mass ratio of ethanol to benzenesulfonic acid to the ionic liquid of 4:0.1:2) were sequentially added into a catalyst storage tank, and stirred by a stirring device at a rotation speed of 300 r/min to obtain a pretreatment catalyst IV.

### Example 5

A method for preparing a catalyst for chemical pretreatment of waste FOG was conducted as follows:
S1. Under room temperature, 0.5 mol of pyridine was added into a reaction kettle; a stirring device was started at a rotation speed of 500 r/min and methanesulfonic acid in an equimolar amount was added dropwise into pyridine; and a resulting mixed system was subjected to reaction for 5 hours, obtaining an ionic liquid mixture.
S2. The ionic liquid mixture was subjected to rotary evaporation at a temperature of 95°C for 4 hours, and a resulting product was then placed in a vacuum drying oven and subjected to vacuum drying at 100°C for 20 hours, obtaining a pyridine methanesulfonic acid ionic liquid.
S3. Butanol, benzenesulfonic acid, and the ionic liquid (at a mass ratio of butanol to benzenesulfonic acid to the ionic liquid of 1:0.01:1) were sequentially added into a catalyst storage tank, and stirred by a stirring device at a rotation speed of 300 r/min to obtain a pretreatment catalyst V.

### Example 6

A method for preparing a catalyst for chemical pretreatment of waste FOG was conducted as follows:
S1. Under room temperature, 0.5 mol of pyridine was added into a reaction kettle; a stirring device was started at a rotation speed of 500 r/min and p-toluenesulfonic acid in an equimolar amount was added dropwise into pyridine; and a resulting mixed system was subjected to reaction for 2 hours, obtaining an ionic liquid mixture.
S2. The ionic liquid mixture was subjected to rotary evaporation at a temperature of 100°C for 5 hours, and a resulting product was then placed in a vacuum drying oven and subjected to vacuum drying at 95°C for 24 hours, obtaining a pyridine p-toluenesulfonic acid ionic liquid.
S3. Ethanol, methanesulfonic acid, and the pyridine p-toluenesulfonic acid ionic liquid (at a mass ratio of ethanol to methanesulfonic acid to the ionic liquid of 6:0.2:3) were sequentially added into a catalyst storage tank, and stirred by a stirring device at a rotation speed of 300 r/min to obtain a pretreatment catalyst VI.

### Use Example

The pretreatment effect of the above-described pretreatment catalysts was investigated by using acidified palm oil with an acid value of 155 mg KOH/g as a raw material and methanol as a short-chain fatty alcohol. A mass ratio of the acidified palm oil to methanol to a catalyst was 1:0.6:0.3. A reaction was conducted at a temperature of 95°C and a pressure of 0.15 MPa for 2 hours.

| Catalyst | I | II | III | IV | V | VI |
|---|---|---|---|---|---|---|
| Acid value/mg KOH/g | 15 | 12 | 18 | 17 | 14 | 16 |
| Fe removal rate/% | 99.4 | 99.7 | 99.1 | 99.3 | 99.6 | 99.5 |
| Ca removal rate/% | 99.6 | 99.5 | 99.3 | 99.3 | 99.5 | 99.2 |
| Na removal rate/% | 86.2 | 84.9 | 83.7 | 84.4 | 85.0 | 84.3 |
| P removal rate/% | 65.8 | 68.4 | 62.9 | 64.0 | 66.2 | 65.3 |
| Unsaponifiable substance removal rate/% | 57.5 | 56.8 | 53.6 | 54.2 | 55.9 | 53.7 |

In the above-described pretreatment effect evaluation, it can be seen from the above results that the catalysts I to VI prepared by the method for preparing the catalyst for chemical pretreatment of waste FOG according to the present disclosure can reduce the acid value of the waste FOG to 10 KOH/g to 20 mg KOH/g, and cause the removal rates of Fe, Ca, Na, P, and unsaponifiable substances to be 99% or more, 99% or more, 80% or more, 60% or more, 50% or more, respectively, indicating that the impurity removal effect is very remarkable.

The catalyst preparation process according to the present invention is simple and has a high raw material utilization rate. The pretreatment catalyst may be prepared by subjecting a tertiary amine compound and an acid in an equimolar amount to one-step neutralization reaction to obtain a Bronsted acid protic ionic liquid, and then mechanically mixing the ionic liquid, an inorganic acid/an organic acid, and a low-carbon alcohol. The catalyst exhibits low viscosity, good fluidity, and convenient transportation. The catalyst according to the present disclosure can catalyze the esterification reaction between the waste FOG and low-carbon alcohols, making it possible to reduce the acid value of the waste FOG and remove impurities such as metals, phospholipids, and unsaponifiable substances from the waste FOG. In addition, the separation process is simple, and the catalyst may be recovered and recycled.

The parts not mentioned in the present disclosure are applicable to the prior art.

Obviously, the above-described embodiments are only examples for clear illustration and are not intended to limit the embodiments. For those skilled in the art, other various changes or modifications can be made based on the above description. An exhaustive list of all embodiments is neither necessary nor possible. The obvious changes or modifications derived therefrom are still within the scope of the present disclosure.

## Claims

1. A catalyst for chemical pretreatment of waste fat, oil and/or grease (FOG), comprising three components of component A, component B, and component C;
wherein the component A is a Bronsted-acid protic ionic liquid composed of a linear or heterocyclic tertiary amine cation and an anion,
the linear tertiary amine cation has a chemical structure represented by following formula: 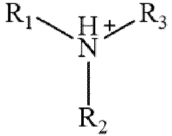
R1, R2 and R3 each being independently C4-12 straight-chain or branched alkyl;
the heterocyclic tertiary amine cation has a chemical structure selected from the group consisting of: 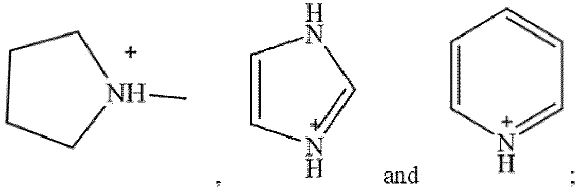
the anion is one selected from the group consisting of hydrogen sulfate ion, methane sulfonate ion, benzene sulfonate ion, and p-toluenesulfonate ion;
the component B is at least one selected from the group consisting of sulfuric acid, methanesulfonic acid, benzenesulfonic acid, and p-toluenesulfonic acid;
the component C is at least one selected from the group consisting of methanol, ethanol, propanol, and butanol; and
a mass ratio of the component A, the component B and the component C in the catalyst is in a range of (1.0-4.0):(0.01-0.3):(1.0-6.0).

2. A method for preparing the catalyst for chemical pretreatment of the waste FOG according to the claim 1, comprising: adding component A, component B, and component C into a storage tank according to a specific proportion to obtain a mixture; and subjecting the mixture to mechanical mixing to obtain the catalyst.

3. The method according to claim 2, wherein the component A is prepared by subjecting a linear or heterocyclic tertiary amine compound and an acid selected from the group consisting of sulfuric acid, methanesulfonic acid, benzenesulfonic acid, and p-toluenesulfonic acid to one-step neutralization reaction.

4. The method according to claim 3, wherein the component A is prepared by a process comprising:
S1, mixing a corresponding tertiary amine compound and the acid in an equimolar amount in a reaction kettle and stirring to be uniform to obtain a mixed system, subjecting the mixed system to reaction to obtain an ionic liquid mixture; and
S2, subjecting the ionic liquid mixture to rotary evaporation and then performing vacuum drying in a vacuum drying oven to obtain an ionic liquid.

5. The method according to claim 4, wherein in step S1, the reaction is conducted for 2 hours to 10 hours.

6. The method according to claim 4, wherein in step S2, the rotary evaporation is conducted at a temperature of 95°C to 100°C for 4 hours to 6 hours, and the vacuum drying is conducted at a temperature of 95°C to 100°C for 12 hours to 24 hours.

7. Use of the catalyst for chemical pretreatment of the waste FOG according to claim 1, comprising: adding the catalyst, the waste FOG, and a low-carbon alcohol into an esterification reactor to obtain a mixed system, and subjecting the mixed system to esterification reaction at a temperature of 50°C to 120°C and a pressure of 0.1 MPa to 1.0 Mpa; wherein a mass ratio of the waste FOG, the low-carbon alcohol and the catalyst is in a range of 1:(0.4-1.6):(0.05-0.50).

8. The use according to claim 7, wherein the catalyst after the esterification reaction is able to be recovered and/or recycled.
